# EUROPÄISCHE PATENTSCHRIFT

(11) **EP 4 037 806 B1**
(45) Veröffentlichungstag und Bekanntmachung des Hinweises auf die Patenterteilung: **22.11.2023**
(21) Anmeldenummer: 20775268.4
(22) Anmeldetag: 18.09.2020
(51) Int. Cl.: B01D 46/00, B01D 46/24, B01D 46/52

(54) **FILTERELEMENT UND VERFAHREN ZUM HERSTELLEN EINES FILTERELEMENTS**
FILTER ELEMENT AND METHOD FOR MANUFACTURING A FILTER ELEMENT
ÉLÉMENT FILTRANT ET PROCÉDÉ DE FABRICATION D'UN ÉLÉMENT FILTRANT

(30) Priorität: 30.09.2019 DE 102019126385
(43) Veröffentlichungstag der Anmeldung: 10.08.2022
(73) Patentinhaber: MANN+HUMMEL GmbH, 71636 Ludwigsburg (DE)
(72) Erfinder: KUPER, Friedrich, 84163 Marklkofen (DE)
(74) Vertreter: Mann + Hummel Intellectual Property
(86) Internationale Anmeldenummer: PCT/EP2020/076062
(87) Internationale Veröffentlichungsnummer: WO 2021/063699

(56) Entgegenhaltungen:
- DE-A1- 10 244 925
- DE-A1-102005 036 366
- DE-A1-102007 003 410
- DE-A1-102016 005 156
- US-A- 4 652 285

## Beschreibung

### Technisches Gebiet

Die vorliegende Erfindung betrifft ein Filterelement zum Filtern eines Fluids, insbesondere zum Filtern von Verbrennungsluft in einem Kraftfahrzeug und/oder zum Filtern von Betriebsmitteln eines Kraftfahrzeugs, sowie ein Verfahren zum Herstellen eines solchen Filterelements.

### Stand der Technik

In Filterelementen, wie zum Beispiel Luftfiltern für Verbrennungsluft eines Kraftfahrzeugs, werden häufig zickzackförmig gefaltete Filtermedien in der Art von Faltenpacks oder Faltenbälgen eingesetzt. Um die zickzackförmigen Faltungen zu stabilisieren und einen Verschluss von Filterfläche während des Betriebs zu verhindern, werden die Falten häufig mit Stützmitteln verstärkt.

Aus der DE 10 2005 036 366 A1 ist ein Verfahren zur Stabilisierung von gefalteten Filtermedien bekannt. Bei dem Verfahren wird ein zylinderförmiges Filterelement aus einem Endlosfaltenbalg mit einem mit Schmelzkleber beschichteten Faden umwickelt. Dabei wird ein plastischer Zustand des Schmelzklebers während des Aufrollens des beschichteten Fadens über die Faltenspitzen durch thermische Mittel aufrechterhalten. Beim Anbringen solcher mit Schmelzkleber beschichteter Fäden auf Faltspitzen wird der Faden radial in Richtung der Faltkanten mit Druckluft, insbesondere heißer Druckluft beaufschlagt, damit der Heißkleber auf die Faltspitzen beziehungsweise Faltkanten gelangt. Ein entsprechend hergestelltes Ringfilterelement ist auch aus der DE 20 2006 008 596 U1 bekannt.

Die DE 10 2016 005 156 A1 offenbart ein Filterelement, welches innerhalb eines Hauptfilterelements aufnehmbar ist und ein Filtermedium, ein das Filtermedium innenseitig abstützendes Mittelrohr und eine außenseitig an dem Filtermedium vorgesehene fadenförmigen Stützstruktur aufweist. Die Stützstruktur ist dabei ähnlich eines Fadens, eines Bandes, eines Drahtes, eines Seils oder einer Schnur flexibel verformbar und auf das Filtermedium aufwickelbar.

Gemäß der DE 102 44 925 A1 wird ein mit Schmelzkleber getränkter Faden im plastischen Zustand um den Filterkörper gewickelt. Der ausgehärtete Schmelzkleber versteift dann den Faden und erhöht damit die Stabilität des Filterkörpers.

Die DE 10 2007 003 410 A1 zeigt eine Filterpatrone als Ionenaustauscher für Schwermetalle und/oder Härtebildner und zur Entfernung von Schwebstoffen, wobei Naturfasermaterialien textil verarbeitet und zu der Filterpatrone konfektioniert sind. Die Naturfasern werden durch Weben, Wirken oder als Vlies zu textilen Flächengebilden verarbeitet und um einen Patronenkern gewickelt.

### Offenbarung der Erfindung

Vor diesem Hintergrund liegt der vorliegenden Erfindung die Aufgabe zugrunde, ein verbessertes Filterelement, insbesondere ein aufwandsgünstig herstellbares Filterelement, zu schaffen. Ferner ist ein vereinfachtes Herstellungsverfahren wünschenswert.

Demgemäß wird ein Filterelement zum Filtern eines Fluids vorgeschlagen, welches ein zickzackförmig gefaltetes Filtermedium mit mehreren Faltkanten aufweist. Das zickzackförmig gefaltete Filtermedium ist mit mindestens einem mithilfe eines Klebstoffmaterials auf die Faltkanten angebrachten Fadens ausgestattet, wobei der Faden als gefachtes Garn ausgeführt ist.

Das Filterelement ist daher insbesondere zum Filtern von Verbrennungsluft in einem Kraftfahrzeug und/oder zum Filtern von Betriebsmitteln eines Kraftfahrzeugs eingerichtet. In Ausführungsformen ist das Filterelement ein Luftfilter, in weiteren Ausführungsformen ist es als Innenraumluftfilter ausgebildet. Bei einem Faltenpack aus zickzackförmig gefaltetem Filtermedium spricht man auch von einem Faltenbalg. Das Filtermedium wird auch als Filtermaterial bezeichnet.

Die Faltkanten begrenzen dabei nebeneinanderliegende Faltabschnitte, wobei benachbarte Faltkanten dabei die gleiche Faltorientierung haben und eine An- oder Abströmseite des Filterelementes bilden. Die an die Faltkanten angebrachten Fadenabschnitte sind insbesondere durch abgebundenes oder ausgehärtetes Klebstoffmaterial verfestigt und können die Abstände zwischen Faltkanten festlegen.

In Ausführungsformen bilden die Faltkanten und die quer dazu verlaufenden Fäden mit Klebstoffmaterial eine Gitterstruktur aus, die das zickzackförmig gefaltete Filtermedium formstabil machen.

Die Ausführung des Fadens als gefachtes Garn führt dazu, dass im Vergleich zu Garnen mit verdrillten oder verdrehten Filamenten oder Fasern ein besseres Anschmiegen auf die Faltkanten während der Herstellung möglich wird. Bei gefachten Garnen verlaufen die Faserbestandteile des Fadens im Wesentlichen nebeneinander und nur vernachlässigbar über Kreuz oder vereinzelt verdreht miteinander. Dadurch wird insbesondere bei der Herstellung das Klebstoffmaterials im plastischen Zustand besser von dem Faden aufgenommen, und es kann ein Andrücken des mit Klebstoff benetzten Fadens auf die Faltkante mit geringerer Kraft während der Herstellung erfolgen.

In Ausführungsformen ist das Faltenpack zu einem zylinderförmigen Endlosfaltenbalg gebogen. Dabei sind insbesondere die Endfaltenabschnitte des Faltenpacks miteinander fluiddicht verbunden. Mit Hilfe eines entsprechenden Endlosfaltenbalgs kann beispielsweise eine Rundfiltergeometrie realisiert werden. Optional können an die Faltprofile Endscheiben oder Endringe angebracht werden, welche die jeweiligen Deckflächen des zylindrischen Rundfilterelements bilden. Insofern umfasst der Endlosfaltenbalg dann stirnseitig Endringe, welche fluiddicht an Faltprofile des zickzackförmig gefalteten Filtermediums angebracht sind. Die Endringe können eine eingelegte Scheibe, zum Beispiel aus Metall und/oder Kunststoff umfassen und geschlossen sein. In Ausführungsformen sind die Endringe an das Filtermedium geklebt, geschäumt oder geschweißt.

In Ausführungsformen umfasst das Filterelement dann ein oder mehrere mit Klebstoffmaterial auf die Faltkanten angebrachte Fäden, welche insbesondere spiralförmig um das zylindrische Rundfilterelement verlaufen. In Ausführungsformen ist das Rundfilterelement mit einem ovalen, nicht kreisförmigen Querschnitt ausgestaltet. Insbesondere bei solchen nicht kreisrunden Querschnittsgeometrien eignen sich die gefachten Garne zum Ausbilden einer Verstärkungs- oder Stabilisierungsstruktur zusammen mit dem Klebstoffmaterial.

In Ausführungsformen umfasst der Faden mehrere Fasern, und das Klebstoffmaterial liegt an dem Faden zumindest teilweise benetzt vor und/oder das Klebstoffmaterial liegt auch zwischen den Fasern vor. Im Vergleich zu verzwirnten oder verdrehten Fasern zum Ausbilden von konventionellen Garnen kann insbesondere das Innere des Fadens leicht mit plastischem Klebstoffmaterial benetzt werden. Gefachte Garne lassen sich insofern besonders gut auf die Faltkanten anbringen.

In Ausführungsformen verlaufen die Fasern des Fadens zwischen zwei direkt benachbarten Faltkanten derselben Faltorientierung parallel zueinander und sind durch Klebstoffmaterial verbunden. Vorzugsweise umfasst das Garn Filamente und ist n-fach gefacht, wobei n größer als 20, vorzugsweise größer als 50 und noch bevorzugter größer als 100 ist.

Der Faden hat in Ausführungsformen weniger als 20, vorzugsweise weniger als 10 Drehungen pro Meter (Drehung Vorzwirn) nach ISO17202:2002.

Denkbar ist eine Zwirnfeinheit von 2500 bis 4500 dtex, vorzugsweise 3000 bis 4000 dtex, noch bevorzugter 3200 bis 3800 dtex nach DIN EN 2060.

Der Faden hat in Ausführungsformen eine maximale Querschnittsausdehnung auf den Faltkanten zwischen 0,2 mm und 10 mm. Die maximale Querschnittsausdehnung verläuft im angebrachten Zustand des Fadens in der Regel quer zur jeweiligen Faltkante aufgrund der Spannung beim Aufwickeln und der Fachung anstelle einer Verdrehung oder Verzwirnung der Fasern.

In Ausführungsformen bilden die Fasern im Ausgangszustand des Fadens vor der Anbringung an die Faltkanten und Benetzung mit Klebstoff einen Durchmesser zwischen 0,2 mm und 10 mm. Es haben sich insbesondere Fadenstärken bzw. Durchmesser zwischen 0,4 mm und 5 mm als günstig erwiesen, weil sich in diesem Größenbereich ein guter Kompromiss zwischen der sich ergebenden Kontaktfläche mit den Faltkanten und dem Materialaufwand ergibt.

In Ausführungsformen bilden der Faden und ausgehärtetes Klebstoffmaterial eine Stützstruktur zwischen den Faltkanten zur Stabilisierung und zum Beabstanden der Faltkanten voneinander aus. Bei Verwendung von gefachten Garnen mit mehreren Fasern ergibt sich insbesondere ein flacher rechteckiger oder ovaler Querschnitt, sodass die Stützstruktur flachbandförmig sein kann. Dadurch, dass die Einzelfasern im Ausgangszustand eher locker aneinander liegen, dringt das Klebstoffmaterial günstig in das Innere des Fadens ein.

In Ausführungsformen sind mehrere Fasern des Fadens entlang ihrer Länge mit dem Klebstoffmaterial benetzt und auf den Faltkanten durch das Klebstoffmaterial derart nebeneinander verbunden, dass eine Breite der Stützstruktur entlang einer jeweiligen Faltkante größer ist als eine Dicke normal zu der Faltkante. Man kann sagen, dass die aus den Fasern und dem festen Klebstoffmaterial gebildeten Stützelemente der Stützstruktur auf der jeweiligen Faltkante flach anliegen.

Das Klebstoffmaterial ist in Ausführungsformen des Filterelements ein Schmelz- oder Heißklebstoffmaterial. Dabei sind die Schmelzpunkte des Heißklebstoffmaterials, beispielsweise ein Thermoplast, mit dem Fadenmaterial so abgestimmt, dass der Faden bei der Schmelztemperatur des Heißklebstoffmaterials unbeschädigt bleibt.

In Ausführungsformen umfasst das Klebstoffmaterial lösemittelhaltige Nassklebstoffe, Kontaktklebstoffe, Dispersionsklebstoffe, Schmelzklebstoffe, Plastisole, Polyadditionsklebstoffe, Polykondensationsklebstoffe, Polymerisationsklebstoffe, Haftklebstoffe.

In Ausführungsformen umfasst der Faden zumindest eines der folgenden Elemente: ein Garn mit Filamentfasern, ein unverzwirntes Garn, unverdrillte Fasern, nicht miteinander verdrehte Fasern und Endlosfilamente. Der Faden und/oder die Fasern sind insbesondere aus einem Polyestermaterial gefertigt.

Das Filtermedium kann gefaltet oder wellenförmig ausgebildet sein. Als Faltungen sind beispielsweise Zickzack- oder W-Faltungen bekannt. Das Filtermedium kann geprägt und anschließend an Prägekanten unter Ausbildung von Faltkanten gefaltet sein. Als Ausgangsmaterial kann ein flächiger Materialfilterbogen dienen, welcher entsprechend umgeformt wird. Das Filtermedium ist beispielsweise ein Filtergewebe, ein Filtergelege oder ein Filtervlies. Insbesondere kann das Filtermedium in einem Spinnvlies- oder Meltblownverfahren hergestellt sein. Weiter kann das Filtermedium verfilzt oder genadelt sein. Das Filtermedium kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Das Filtermedium kann ein- oder mehrlagig sein. Es kann ferner ein Adsorptionsmittel, wie etwa Aktivkohle, aufweisen. Weiterhin kann das Filtermedium eine antimikrobielle und/oder antiallergene Wirkung aufweisen. Als antimikrobieller Stoff kommt beispielsweise Zink-Pyrithion oder Nanosilber, als antiallergener Stoff beispielsweise Polyphenol in Betracht.

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

Ein insbesondere offenes Filtermedium kann dazu eingerichtet sein, Partikel des Teststaubs A4 nach ISO 12103-1 aus einem Luftstrom mit einer Filtrationsgeschwindigkeit von 0,10 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 71460-1 erfolgen.

Ein insbesondere hochabscheidendes Filtermedium kann dazu eingerichtet sein, Partikel des Teststaubs A2 nach ISO 12103-1 sowie NaCl-Aerosolpartikel gemäß DIN 71460-1 aus einem Luftstrom mit einer Filtrationsgeschwindigkeit von 0,10 bis 0,30 m/s, bezogen auf die Filtermedienfläche, bei einer Luftdurchlässigkeit von größer 600 l/m²s (bestimmt gemäß ISO 9237 bei 200 Pa) zu entfernen. Die Ermittlung der Filtrationskennwerte kann beispielsweise gemäß DIN 71460-1 erfolgen.

Das Filterelement bzw. die Filteranordnung kann in Personenkraftwagen, Lastkraftwagen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, in Brennstoffzellen oder in der Gebäudetechnik Anwendung finden. Diese Kraftwagen oder Fahrzeuge können elektrisch und/oder mittels Kraftstoff (insbesondere Benzin oder Diesel) betrieben werden. Im Hinblick auf die Gebäudetechnik kommen insbesondere stationäre Anlagen zur Behandlung von Luft in Betracht.

Weiterhin wird ein Verfahren zum Herstellen eines Filterelements vorgeschlagen.

Bei einem Herstellungsverfahren zum Herstellen eines Filterelements wird ein Faden als gefachtes Garn mithilfe eines Klebstoffmaterials auf Faltkanten eines zickzackförmig gefalteten Filtermaterials angebracht. Dabei können insbesondere einer oder mehrere der folgenden Schritte durchgeführt werden:
Tränken und/oder Benetzen des Fadens mit plastischem Klebstoffmaterial;
Anbringen des mit Klebstoffmaterial getränkten und/oder benetzten Fadens unter Beaufschlagung eines Drucks auf die Faltkanten; und
Aushärten des Klebstoffmaterials.

Durch die Wahl des gefachten Garns als Faden zum Ausbilden einer Stabilisierungsstruktur mithilfe der Fasern und des abgebundenen bzw. ausgehärteten Klebstoffmaterials kann die Herstellung, insbesondere von Endlosfaltenbalgen, vereinfacht werden. In Ausführungsformen wird der mit Klebstoffmaterial getränkte und/oder benetzte Faden auf die Faltkanten gewickelt.

Beim Wickeln erfolgt eine Rotation, insbesondere des Endlosfaltenbalges, um eine horizontale Achse. Insofern wird aus dem zickzackförmig gefalteten Filtermedium ein zylindrischer Endlosfaltenbalg gebildet. Dieser wird zum Umwickeln mit dem Faden um eine horizontale Achse gedreht.

In Ausführungsformen des Herstellungsverfahrens wird der Faden aus Einzelfasern gebildet, die insbesondere Endlosfilamente sind. Die Einzelfasern werden mithilfe einer Fadenspannung oder eines Drucks in Richtung auf die Faltkanten beim Anbringen zumindest teilweise entlang der Faltkanten auseinandergedrückt.

Dadurch, dass ein gefachtes Garn verwendet wird, können die den Faden bildenden Fasern eine Ausweichbewegung zur Seite entlang der Faltkanten ausführen. Dadurch ergibt sich eine flache Querschnittsstruktur der ausgebildeten Stützstruktur aus den Fasern und dem Klebstoffmaterial. Durch die Fadenspannung kann sich insbesondere beim Wickeln eine resultierende radiale Kraft ergeben, so dass der Faden radial auf die Faltkanten gedrückt wird. Der Ausgangsquerschnitt des Fadens wird dabei in einer Axialrichtung des Filterelementes vergrößert und in einer Radialrichtung verkleinert.

Der Einsatz von gefachten Garnen führt zu einer gleichmäßigeren Verteilung des verklebten Fadens auf den Faltenspitzen bzw. Faltkanten. Dadurch kann auch eine gleichmäßige Verteilung des Klebstoffs in oder auf dem Faden erzielt werden, wodurch eine günstige Haftkraftverteilung erzielt wird. Ferner kann das gefachte Garn einfacher hergestellt werden als die sonst üblichen Garne aus miteinander verdrillten oder verdrehten Endlosfilamenten. Gefachtes Garn ist in der Regel flexibler oder weicher als sonst übliche konventionelle Garne. Dadurch ist die Verarbeitbarkeit insbesondere, wenn viskoses oder plastisches Klebstoffmaterial auf den Faden aufgebracht ist, vereinfacht.

Das Herstellungsverfahren dient insbesondere der Herstellung eines wie zuvor oder im Folgenden beschriebenen Filterelements.

In Ausführungsformen des Verfahrens wird das Klebstoffmaterial in einem fließfähigen Zustand auf oder an die Fasern aufgetragen. Dabei kann die Viskosität, beispielsweise bei Heißklebemitteln durch die Temperatur und/oder Zusammensetzung, so eingestellt werden, dass der gewünschte Klebstoffauftrag auf den Faden realisiert wird.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen. Die bezüglich dem Filterelement erläuterten Aspekte, Vorteile und Wirkungen gelten ebenso für entsprechende Aspekte des Herstellungsverfahrens und umgekehrt.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine perspektivische Darstellung einer Ausführungsform eines Filterelements;
Fig. 2: eine schematische Darstellung einer Ausführungsform eines Garns zum Einsatz in einem Filterelement nach Fig. 1;
Fig. 3: eine schematische Darstellung einer Ausführungsform eines konventionellen Garns;
Fig. 4: Verfahrensschritte einer Ausführungsform eines Herstellungsverfahrens für ein Filterelement;
Fig. 5: eine schematische Querschnittsdarstellung von Zuständen eines Garns während der Herstellung eines Filterelements;
Fig. 6: eine schematische Darstellung eines konventionellen Garns an einem Filterelement; und
Fig. 7, 8: schematische Darstellungen einer Vorrichtung zur Durchführung des Herstellungsverfahrens nach Fig. 4.

In den Figuren sind gleiche oder funktionsgleiche Elemente, sofern nichts anderes angegeben ist, mit denselben Bezugszeichen versehen worden.

### Ausführungsform(en) der Erfindung

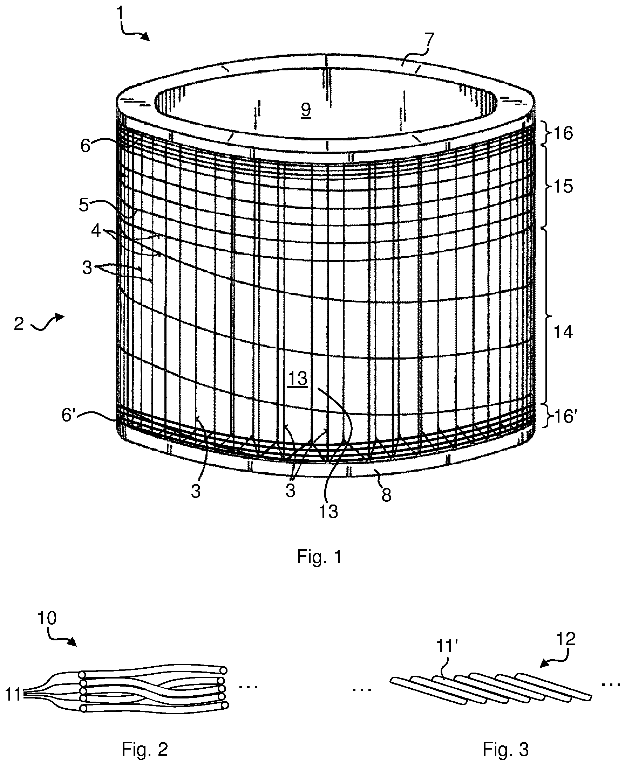

Fig. 1 zeigt eine perspektivische Darstellung einer Ausführungsform eines Filterelements 1. Das Filterelement 1 ist beispielsweise als ein Luftfilterelement für Kraftfahrzeuge, insbesondere für Lkws oder größere Landmaschinen, ausgebildet. Dazu wird ein zickzackförmiges flaches Filtermaterial zu einem Endlosfaltenbalg 2 an Endfaltenabschnitten verbunden. Dadurch ergibt sich ein zylinderförmiger Faltenbalg 2, der in der Ausführungsform der Fig. 1 mit einem oberen Endring 7 und einem unteren Endring 8, die jeweils an Faltprofilen des Faltenbalgs 2 angebracht sind, ausgestattet ist. Die Endringe 7, 8 können dabei aus einem Kunststoffmaterial bestehen oder durch ein geeignetes Verfahren angeschäumt sein.

In Ausführungsformen werden solche axial dichtenden Endringe 7, 8 aus einem PUR-Schaummaterial gebildet. Zwischen diesen Endringen 7, 8, die in Varianten des Filterelementes 1 scheibenförmig ausgebildet sind, erstreckt sich axial der Faltenbalg 2 mit benachbarten, nach außen gerichteten Faltkanten 3. Zwischen Faltkanten 3 sind Faltabschnitte 13 angeordnet, von denen nur zwei in der Fig. 1 benannt sind.

In hier nicht dargestellten Ausführungsformen kann ein jeweiliger fluiddicht geschlossener Endring ausgebildet werden, indem eine von PUR-Schaum umschlossene Scheibe, beispielweise aus Metall oder Kunststoff, einen Boden bildet. Man kann dann auch von einer Endscheibe sprechen. Denkbar sind mehrteilige oder einteilige Endscheiben.

Die Endringe 7, 8 oder Endscheiben sind vorzugsweise derart geformt, dass sie axial und/oder radial wirkende Dichtflächen oder Dichtkanten ausbilden.

Um den Umfang des Filterelementes 1 sind eine oder mehrere Fäden 4, 5, 6, 6' gewickelt und mit einem geeigneten Klebstoffmaterial auf die Faltkanten 3 umfangsseitig befestigt. Das Ausführungsbeispiel der Fig. 1 zeigt dabei vier Höhenabschnitte 14, 15, 16, 16', die durch die Wicklung des jeweiligen Fadens 4, 5, 6, 6' vorgegeben sind. Der obere Abschnitt 16 umfasst dabei mehrere parallel gewickelte, eng benachbarte Fäden 6, die auf die Faltkanten 3 angebracht sind. Der darunterliegende Abschnitt 15 umfasst mehrere parallel auf die Faltkanten 3 gewickelte und mit Klebstoff befestigte Fäden 5. Der untere Abschnitt 14 zeigt einen spiralförmig gewickelten Faden 4, der ebenfalls auf die Faltkanten 3 angebracht ist. Der letzte Abschnitt 16' entspricht in der Wicklung wieder dem ersten oberen Abschnitt 16. Insofern haben gegenüberliegende Seiten des Filterelements 1 gleiche Abschnitte 16, 16' bezüglich der mit Klebstoff befestigten Fäden 6, 6'. Grundsätzlich kann die Art der Wicklung variieren, beispielsweise kann im Verlauf der Höhe beziehungsweise axial entlang des Endlosfaltenbalgs 2 eine Steigung der Fadenwicklung verändert sein.

Die Fäden 4, 5, 6, 6' stabilisieren zusammen mit dem gewählten Klebstoffmaterial, beispielsweise einem ausgehärteten Heißkleber, die Faltungen, welche aus den Faltkanten 3 und den Faltabschnitten 13 gebildet sind. Beispielsweise wird beim Betrieb des Filterelementes 1 Rohluft in den inneren Bereich 9 eingeführt und tritt nach außen radial durch den Endlosfaltenbalg 2 aus. Durch die Druckdifferenz zwischen dem Innenraum 9 und dem äußeren Reinluftbereich sind die Faltkanten 3 und Faltabschnitte 13 Radialkräften ausgesetzt. Durch die Wicklung entsteht durch die Befestigung auf den Faltkanten 3 insgesamt eine Stützstruktur für das Filterelement 1. Dabei wird ein gefachtes Garn für die jeweiligen Fäden 4, 5, 6, 6' verwendet.

In der Fig. 2 ist eine schematische Darstellung einer Ausführungsform eines geeigneten Garns zum Einsatz als Fäden in dem Filterelement 1 gemäß der Fig. 1 angedeutet. Man erkennt in der Fig. 2, dass der Faden 10 in der Art eines Garns mit mehreren Fasern 11 ausgeführt ist. Die Fasern 11 verlaufen dabei über die Länge des Fadens 10 im Wesentlichen nebeneinander und unverdrillt miteinander. Das heißt, an den Endseiten können die Fasern 11, die beispielsweise als Polyester-Endlosfilamente ausgebildet sind, leicht ausfransen. Durch das lockere Aneinanderliegen im Ausgangszustand des Fadens 10 kann dieser nun in einem Herstellungsverfahren für das Filterelement 1 nach Fig. 1 günstig mit einem plastischen Klebstoff benetzt oder getränkt werden. Im Vergleich zu konventionellen Garnen, die meist verdrehte oder gedrillte Fasern aufweisen, ist dabei die Verarbeitung erleichtert.

Die Fig. 3 zeigt eine schematische Darstellung eines konventionellen Garns 12. Dabei sind die Fasern 11' entlang der Längsachse miteinander verdrillt oder verzwirnt. Insofern ergibt sich ein stabilerer Querschnitt, allerdings liegen die Einzelfasern 11 ' auch enger beieinander, so dass eine Tränkung oder Benetzung mit plastischem Klebstoffmaterial eher erschwert ist.

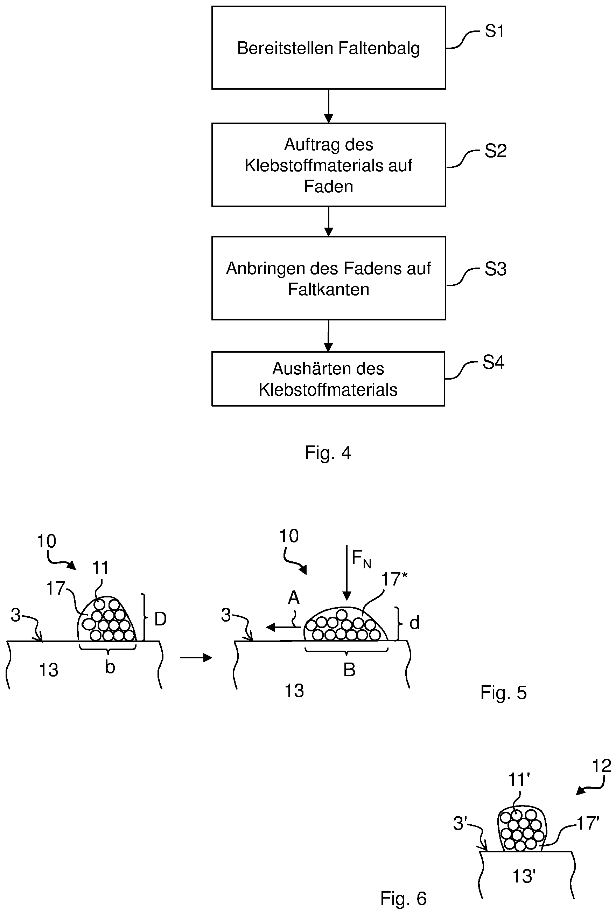

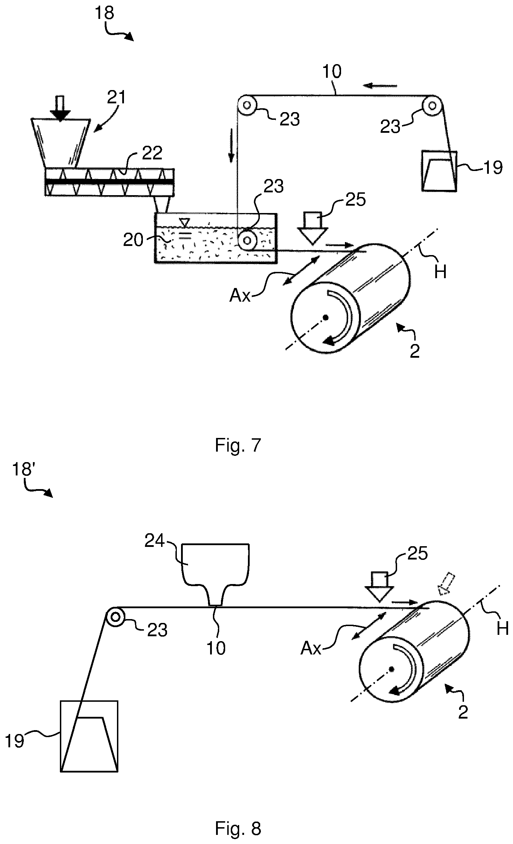

In den folgenden Fig. 4 bis 8 sind Varianten eines Herstellungsverfahrens für ein Filterelement mit einer Fadenwicklung erläutert. Dabei zeigen die Fig. 7 und 8 mögliche Herstellungsvorrichtungen oder Anordnungen zur Herstellung eines Rundfilterelements mit einem stabilisierenden aufgewickelten Faden.

In einem ersten Verfahrensschritt S1 wird ein Faltenbalg 2 bereitgestellt. Dies kann insbesondere ein Endlosfaltenbalg sein, bei dem die Endfaltenabschnitte eines zickzackförmig gefalteten Filtermediums miteinander verbunden sind und dadurch einen Ring aus Falten bilden. Dies ist in der Fig. 1 mit dem Bezugszeichen 2 bezeichnet. In der Fig. 7 wird der zylinderförmige Endlosfaltenbalg 2 um seine Längsachse horizontal gedreht.

Dadurch lässt sich, wie im Folgenden beschrieben ist, ein mit insbesondere Heißkleber getränkter oder benetzter Faden um den Umfang des Endlosfaltenbalges 2 wickeln.

In einem zweiten Verfahrensschritt S2 erfolgt ein Auftragen des Klebstoffmaterials 17 auf einen Faden 10 aus gefachtem Garn. In der Herstellungsanordnung 18 der Fig. 7 wird der Faden 10 von einer Garnrolle 19 über geeignete Rollen 23 abgerollt und einem Heißkleberbad 20 zugeführt. Das Heißkleberbad 20 wird durch Schmelzen von Heißklebermaterial 21, das auch als Heißklebstoff, Heißkleber-Hotmelt oder Heißleim bezeichnet wird, verflüssigt und über einen Extruder 22 dem Heißkleberbad 20 zugeführt.

Heißkleber umfassen meist Basispolymere und Harzbestandteile, wobei insbesondere Polyamide, Polyethylen, Polyester-Elastomere, Polyurethan-Elastomere, Copolyamid-Elastomere oder Ethylenvinylacetat-Copolymere eingesetzt werden. Als Harzbestandteil kommen Colophonium oder Terpene oder andere Kohlenwasserstoffharze in Frage. Das Klebstoffmaterial 21 wird dabei zum Beispiel als Granulat geliefert und aufgeschmolzen.

Anschließend wird im Schritt S3 der mit plastischem Klebstoffmaterial versehene Faden 10 an die Faltkanten 3 des Endlosfaltenbalgs 2 angebracht. Eine Positioniervorrichtung 25 kann den mit Klebstoff benetzten oder getränkten Faden 10 insbesondere axial entlang der Faltkanten 3 führen, so dass eine gewünschte Wicklungsgeometrie entsteht. Anschließend erfolgt ein Aushärten des Klebstoffmaterials beispielsweise in einem Abkühlschritt, so dass eine die Falten stabilisierende und stützende Stützstruktur aus dem ausgehärteten Klebstoffmaterial 17 und den Garnbestandteilen 10 entsteht.

Alternativ zu dem in der Fig. 7 angedeuteten Klebstoffbad 20 kann der Faden 10 auch über eine geeignete Klebstoffauftragsdüse 24, wie sie in der Fig. 8 angedeutet ist, mit flüssigem Klebstoff versehen werden.

Die aus gefachtem Garn eingesetzten Fäden 10 schmiegen sich insbesondere günstig auf die Faltkanten 3 des zickzackförmig gefalteten Filtermediums 2 an. Dadurch erfolgt eine gute Verklebung und Haftung auf die Faltkanten 3. Beim Aufwickeln oder Aufbringen des mit Klebstoff 17 benetzten oder getränkten Fadens 10 wirkt eine Normalkraft von außen in Richtung auf die Faltkanten 3. Dadurch verformt sich das gefachte Garn und bildet einen guten Klebschluss mit dem Material des Filtermediums. Dies ist in der Fig. 5 erläutert.

In der Fig. 5 links erkennt man eine Faltkante 3, die einen Faltabschnitt 13 begrenzt. Der Faden 10 umfasst dabei mehrere Fasern 11 und ist nach dem Klebstoffmaterialauftrag beispielsweise durch die Auftragsdüse 24 (vgl. Fig. 8) oder das Durchlaufen des Kleberbades 20 (siehe Fig. 7) mit flüssigem plastischem Klebstoffmaterial 17 versehen oder benetzt. Beim Anbringen auf die Faltkanten 3 beispielsweise durch das Wickeln erkennt man, dass der Querschnitt des Fadens 10 zunächst eine Breite b und eine Dicke D hat. Im Ausgangszustand hat der Faden eine Breite b und Dicke D, die in etwa dem Durchmesser von beispielsweise ca. 1 mm entsprechen. Das flüssige Klebstoffmaterial ist dabei mit 17 bezeichnet. Da die Fasern 11 nur gering oder gar nicht miteinander verdreht sind, kann durch Beaufschlagung mit einer Normalkraft F_{N}, die bei der Umwicklung von Endlosfaltenbälgen radial nach innen wirkt, der Faden 10 im Querschnitt verformt werden.

In der Fig. 5 auf der rechten Seite ist dabei die radiale Kraft F_{N} dargestellt. Die Kraft F_{N} kann durch die Fadenspannung beim Wickeln erzeugt werden oder auch durch eine externe Einrichtung, beispielsweise eine Rolle, die auf die Faltkanten 3 drückt, erzeugt werden. Durch die Kraft F_{N} ergibt sich eine Ausweichbewegung A der Fasern 11 entlang der Faltkante 3. Die Fasern 11 verteilen sich zusammen mit dem Klebstoffmaterial 17 entlang der Faltkante 3 und bilden so einen flacheren Querschnitt. Die Dicke d < D verringert sich dabei. Gleichzeitig vergrößert sich die Breite B > b durch das Aufwickeln des gefachten Fadens 10. Die sich aus dem verfestigten Klebstoffmaterial 17* und den fasern 11 ergebende Stützstruktur ist daher breiter als sie dick ist, wobei die Dicke radial zu und die Breite axial entlang der Faltkanten 3 betrachtet ist. In der Darstellung der Fig. 5 entspricht die Breite B der maximalen Querschnittsausdehnung des angebrachten Fadens 10.

Im Vergleich dazu ist in der Fig. 6 eine schematische Querschnittsdarstellung eines konventionellen Garns 12 mit Fasern 11' und Klebstoffmaterial 17' an einer Faltkante 3' eines Faltabschnitts 13' dargestellt. Das konventionelle Garn 12 hat dabei insbesondere miteinander verdrillte, fest anliegende Fasern 11'. Diese eng aneinander liegenden Fasern 11' lassen sich nicht leicht auf die Faltkante 3' andrücken, so dass häufig bei der Herstellung entsprechender gewickelter Filter mit verdrillten Fasern eine zusätzliche Beaufschlagung mit Luft, insbesondere Druckluft, insbesondere kalter oder heißer (Druck-) Luft notwendig ist. Auf derartige Maßnahmen kann beim Einsatz von gefachten Garnen verzichtet werden.

Durch die gefachten Garne, bei denen mehrere Einzelfasern oder -fäden zusammengelegt sind und diese locker entlang der Länge vorliegen, kann eine einfache Benetzung oder Tränkung mit flüssigem Heißkleber erfolgen. Dadurch verteilt sich der Klebstoff im plastischen Zustand besser als bei sonst üblichen gezwirnten Garnen. Im gewickelten und ausgehärteten Zustand ergibt sich insbesondere eine flache Stützstruktur auf den Faltspitzen oder Faltkanten, bei der eine Dicke der Stützstruktur geringer ist als die Breite auf den Faltkanten.

Obwohl die vorliegende Erfindung anhand von Ausführungsbeispielen beschrieben wurde, ist sie nicht darauf beschränkt, sondern vielfältig modifizierbar. Insbesondere lässt sich gefachtes Garn mit im Wesentlichen parallel verlaufenden Fasern, insbesondere Monofilamenten, auch bei Flachfilterelementen einsetzen. Die mit Klebstoff getränkten oder benetzten Fäden aus gefachten Garnen werden dann nicht gewickelt, sondern auf flache Faltenbälge oder Faltenpacks aufgebracht. Obwohl in dem Ausführungsbeispiel ein Rundfilterelement mit kreisförmigem Querschnitt angedeutet ist, lässt sich das Herstellungsverfahren insbesondere günstig für ovale Filterelemente oder Filterelemente mit einem Stadionquerschnitt einsetzen. Die genannten Normen beziehen sich auf den Stand des Anmeldetags.
- 1: Filterelement
- 2: Faltenpack
- 3, 3': Faltkante
- 4, 5, 6, 6': Faden
- 7, 8: Endring
- 9: Innenraum
- 10: Garn
- 11, 11': Faser
- 12: Garn
- 13, 13': Faltabschnitt
- 14, 15, 16, 16': Wickelabschnitt
- 17, 17': Klebstoffmaterial
- 17*: ausgehärtetes Klebstoffmaterial
- 18: Herstellungsanordnung
- 19: Garnrolle
- 20: Kleberbad
- 21: Schmelzklebematerial
- 22: Extruder
- 23: Führungsrolle
- 24: Klebstoffauftragsdüse
- 25: Positioniereinrichtung
- D, d: Dicke
- B, b: Breite
- F_{N}: Normalkraft
- A: Ausweichbewegung
- H: Drehachse

## Patentansprüche

1. Filterelement (1) zum Filtern eines Fluids, insbesondere zum Filtern von Verbrennungsluft in einem Kraftfahrzeug und/oder zum Filtern von Betriebsmitteln eines Kraftfahrzeugs, mit einem zickzackförmig gefalteten Filtermedium (2), welches mehrere benachbarte Faltkanten (3) umfasst, und mit mindestens einem mit Hilfe eines Klebstoffmaterials (17) auf die Faltkanten (3) angebrachten Fadens (10),
**dadurch gekennzeichnet, dass**
der Faden (10) als gefachtes Garns ausgeführt ist.

2. Filterelement nach Anspruch 1, wobei der Faden (10) mehrere Fasern (11) umfasst und das Klebstoffmaterial (17) den Faden (10) zumindest teilweise benetzt und/oder zwischen den Fasern (11) vorliegt.

3. Filterelement nach Anspruch 1 oder 2, wobei der Faden und ausgehärtetes Klebstoffmaterial eine Stützstruktur zwischen den Faltkanten (3) zur Stabilisierung und zum Beabstanden der Faltkanten (3) voneinander ausbilden.

4. Filterelement nach Anspruch 3, wobei mehrere Fasern (11) des Fadens (10) entlang ihrer Länge mit dem Klebstoffmaterial (17) benetzt sind und auf den Faltkanten (3) durch das Klebstoffmaterial (17) derart nebeneinander verbunden sind, dass eine Breite (B) der Stützstruktur entlang einer jeweiligen Faltkante (3) größer ist als eine Dicke (d) normal zu der Faltkante (3).

5. Filterelement nach einem der vorherigen Ansprüche, wobei das zickzackförmig gefaltete Filtermedium (2) einen zylindrischen Endlosfaltenbalg bildet, welcher von dem Faden (10) umwickelt ist.

6. Filterelement nach Anspruch 5, wobei der Endlosfaltenbalg stirnseitig Endringe (7, 8) umfasst, welche fluiddicht an Faltprofile des zickzackförmig gefalteten Filtermediums (2) angebracht sind.

7. Filterelement nach einem der vorherigen Ansprüche, wobei der Faden (10) ein Garn mit Filamentfasern, ein unverzwirntes Garn, unverdrillte Fasern, nicht gedrehte Fasern, insbesondere aus einem Polyestermaterial, umfasst.

8. Filterelement nach einem der vorherigen Ansprüche, wobei das Klebstoffmaterial (17) ein Heißklebstoffmaterial ist.

9. Verfahren zum Herstellen eines Filterelements (1), bei dem ein Faden (10) als gefachtes Garn mit Hilfe eines Klebstoffmaterials (17) auf Faltkanten (3) eines zickzackförmig gefalteten Filtermaterials (2) angebracht wird.

10. Verfahren nach Anspruch 9, mit den Schritten:
Tränken und/oder Benetzen des Fadens (10) mit plastischem Klebstoffmaterial (17);
Anbringen des mit Klebstoffmaterial (17) getränkten und/oder benetzten Fadens (10) unter Beaufschlagung eines Drucks (F_{N}) auf die Faltkanten (3); und
Aushärten des Klebstoffmaterials (17).

11. Verfahren nach Anspruch 9 oder 10, wobei der mit Klebstoffmaterial (17) getränkte und/oder benetzte Faden (10) auf die Faltkanten (3) gewickelt wird.

12. Verfahren nach einem der vorherigen Ansprüche, wobei der Faden (10) aus Einzelfasern (11) gebildet wird, und die Einzelfasern (11) mit Hilfe einer Fadenspannung oder eines Drucks (F_{N}) in Richtung auf die Faltkanten (3) beim Anbringen zumindest teilweise entlang der Faltkanten (3) auseinander gedrückt werden.

13. Verfahren nach einem der vorherigen Ansprüche, wobei das zickzackförmig gefaltete Filtermedium (2) einen zylindrischen Endlosfaltenbalg bildet, welcher zum Umwickeln mit dem Faden (10) um eine horizontale Achse (H) gedreht wird.

14. Verfahren nach Anspruch 13, wobei an Stirnseiten des Endlosfaltenbalgs derart Endringe (7, 8) angebracht werden, dass die Endringe (7, 8) fluiddicht an Faltprofilen des zickzackförmig gefalteten Filtermediums (2) anliegen, und insbesondere an das Filtermedium (2) angeschäumt oder angeklebt werden.

## Claims

1. Filter element (1) for filtering a fluid, in particular for filtering combustion air in a motor vehicle and/or for filtering operating means of a motor vehicle, having a zigzag-folded filter medium (2) comprising plurality of adjacent fold edges (3), and having at least one thread (10) applied to the fold edges (3) using an adhesive material (17),
**characterized in that**
the thread (10) is designed as plied yarn.

2. Filter element according to claim 1, wherein the thread (10) comprises a plurality of fibers (11) and the adhesive material (17) at least partially wets the thread (10) and/or is present between the fibers (11).

3. Filter element according to claim 1 or 2, wherein the thread and cured adhesive material form a support structure between the fold edges (3) for stabilizing and separating the fold edges (3) from each other.

4. Filter element according to claim 3, wherein a plurality of fibers (11) of the thread (10) are wetted along their length with the adhesive material (17) and are connected on the fold edges (3) through the adhesive material (17) in such a contiguous manner that a width (B) of the support structure along a respective fold edge (3) is greater than a normal thickness (d) to the fold edge (3).

5. Filter element according to one of the preceding claims, wherein the zigzag folded filter medium (2) forms a cylindrical endless bellows wound by the thread (10).

6. Filter element according to claim 5, wherein the endless bellows comprises end rings (7, 8) on the front face, which are attached in a fluid-tight manner to the folding profiles of the zigzag folded filter medium (2).

7. Filter element according to one of the preceding claims, wherein the thread (10) comprises yarn with filament fibers, an untwined yarn, untwisted fibers, non-twisted fibers, in particular made of a polyester material.

8. Filter element according to one of the preceding claims, wherein the adhesive material (17) is a hot melt adhesive material.

9. Method for manufacturing a filter element (1), in which a thread (10) is applied as a plied yarn using an adhesive material (17) to fold edges (3) of a zigzag-folded filter material (2).

10. Method according to claim 9, comprising the steps:
impregnating and/or wetting the thread (10) with plastic adhesive material (17);
applying the thread (10) impregnated and/or wetted with adhesive material (17) while applying a pressure (F_{N}) to the fold edges (3); and
curing the adhesive material (17).

11. Method according to claim 9 or 10, wherein the thread (10) impregnated and/or wetted with adhesive material (17) is wound onto the fold edges (3).

12. Method according to one of the preceding claims, wherein the thread (10) is formed from individual fibers (11), and the individual fibers (11) are pressed apart at least partially along the fold edges (3) using a thread tension or pressure (F_{N}) towards the fold edges (3) during application.

13. Method according to one of the preceding claims, wherein the zigzag folded filter medium (2) forms a cylindrical endless bellows, which is rotated around a horizontal axis (H) in order to be wound with the thread (10).

14. Method according to claim 13, wherein end rings (7, 8) are applied to front faces of the endless bellows in such a way that the end rings (7, 8) rest in a fluid-tight manner against folded profiles of the zigzag-folded filter medium (2), and in particular are foamed or glued onto the filter medium (2).

## Revendications

1. Élément filtrant (1) destiné au filtrage d'un fluide, notamment au filtrage d'air de combustion dans un véhicule automobile et/ou au filtrage de carburants d'un véhicule automobile, ayant un milieu filtrant (2) plié en accordéon qui comprend plusieurs arêtes de pliage (3) voisines, et ayant au moins un fil (10) fixé sur les arêtes de pliage (3) à l'aide d'un matériau adhésif (17),
**caractérisé en ce que**
le fil (10) est exécuté sous forme de fils jumeaux.

2. Élément filtrant selon la revendication 1, le fil (10) comprenant plusieurs filaments (11) et le matériau adhésif (17) mouillant, au moins en partie, le fil (10) et/ou étant monté entre les filaments (11).

3. Élément filtrant selon la revendication 1 ou 2, le fil et un matériau adhésif durci formant une structure de support entre les arêtes de pliage (3) afin de stabiliser et d'espacer les arêtes de pliage (3) les unes des autres.

4. Élément filtrant selon la revendication 3, plusieurs filaments (11) du fil (10) étant mouillés le long de leur longueur du matériau adhésif (17) et reliés les uns à côté des autres par le matériau adhésif (17) sur les arêtes de pliage (3) de sorte qu'une largeur (B) de la structure de support le long d'une arête de pliage (3) respective soit supérieure à une épaisseur (d) normale par rapport à l'arête de pliage (3).

5. Élément filtrant selon l'une quelconque des revendications précédentes, le milieu filtrant (2) plié en accordéon formant un soufflet continu cylindrique autour duquel le fil (10) est enroulé.

6. Élément filtrant selon la revendication 5, le soufflet continu comprenant du côté frontal des bagues d'extrémité (7, 8) qui sont montées de manière étanche aux fluides sur des profils pliés du milieu filtrant (2) plié en accordéon.

7. Élément filtrant selon l'une quelconque des revendications précédentes, le fil (10) comprenant un filé avec des fibres filaments, un filé non retordu, des filaments détorsadés, des filaments non torsadés, notamment réalisés dans un matériau polyester.

8. Élément filtrant selon l'une quelconque des revendications précédentes, le matériau adhésif (17) étant une matière adhésive thermocollante.

9. Procédé de fabrication d'un élément filtrant (1), dans lequel un fil (10) est fixé sous forme de fils jumeaux, à l'aide d'un matériau adhésif (17), sur des arêtes de pliage (3) d'un milieu filtrant (2) plié en accordéon.

10. Procédé selon la revendication 9, comprenant les étapes suivantes :
imbiber et/ou mouiller le fil (10) d'un matériau adhésif plastique (17);
monter le fil (10) imbibé et/ou mouillé du matériau adhésif (17) en appliquant une pression (F_{N}) sur les arêtes de pliage (3);
et durcir le matériau adhésif (17).

11. Procédé selon la revendication 9 ou 10, le fil (10) imbibé et/ou mouillé du matériau adhésif (17) étant enroulé sur les arêtes de pliage (3).

12. Procédé selon l'une quelconque des revendications précédentes, le fil (10) étant constitué de filaments individuels (11) et les filaments individuels (11) étant écartés, lors du montage, au moins en partie le long des arêtes de pliage (3), par tension du fil ou sous l'effet d'une pression (F_{N}), en direction des arêtes de pliage (3).

13. Procédé selon l'une quelconque des revendications précédentes, le milieu filtrant (2) plié en accordéon formant un soufflet continu cylindrique qui est tourné de sorte que le fil (10) soit enroulé autour d'un axe horizontal (H).

14. Procédé selon la revendication 13, des bagues d'extrémité (7, 8) étant montées sur les faces frontales du soufflet continu de sorte que les bagues d'extrémité (7, 8) soient appliquées de manière étanche aux fluides sur des profils pliés du milieu filtrant (2) plié en accordéon, et soient notamment moussées ou collées sur le milieu filtrant (2).
